# EUROPÄISCHE PATENTSCHRIFT

(11) **EP 2 229 048 B1**
(45) Veröffentlichungstag und Bekanntmachung des Hinweises auf die Patenterteilung: **11.03.2015**
(21) Anmeldenummer: 09700121.8
(22) Anmeldetag: 02.01.2009
(51) Int. Cl.: A01G 9/16

(54) **ANBAUBARES ZIMMERGEWÄCHSHAUS**
MOUNTABLE GREENHOUSE FOR ROOMS
SERRE D'INTÉRIEUR À MONTER

(30) Priorität: 02.01.2008 DE 102008003134
(43) Veröffentlichungstag der Anmeldung: 22.09.2010
(73) Patentinhaber: Sauermann, Denis, 10245 Berlin (DE)
(72) Erfinder: Sauermann, Denis, 10245 Berlin (DE)
(74) Vertreter: Wüstefeld, Regine Marie
(86) Internationale Anmeldenummer: PCT/EP2009/000001
(87) Internationale Veröffentlichungsnummer: WO 2009/083601

(56) Entgegenhaltungen:
- WO-A1-2007/144117
- DE-A1- 3 433 215
- FR-A- 1 525 915
- TW-U- M 313 418

## Beschreibung

Die vorliegende Erfindung betrifft ein Zimmergewächshaus und eine Vorrichtung, um dieses Zimmergewächshaus geeignet mit Lüftungs-, Wasser- und Stromleitungen zu verbinden.

Heute ist es immer weniger möglich, daß in Städten, insbesondere in Großstädten, eine eigene Kultivierung von Nutz- oder Zierpflanzen in einem Garten, auf einem Stück Erde, erfolgen kann. Die Unterbringung der Menschen erfolgt in den Großstädten vorwiegend in mehrstöckigen Wohnblocks, die ein solches eigenständiges Bearbeiten von landwirtschaftlichen Flächen oder Gärten nicht mehr erlauben.
Gleichzeitig nimmt das Bedürfnis am eigenen Umgang mit land- oder gartenwirtschaftlich erzeugten Produkten zu. In den U.S.A. ist man in Großstädten bereits in Pilotprojekten dazu übergegangen, fehlende Acker- und Gartenfläche durch auf den Hochhäusern angelegte land- und gartenwirtschaftlich genutzte Flächen zu ersetzen. Dort werden bereits in großer Höhe Salate und sonstige Gemüsearten gezogen. Integriert in solche Anlagen sind Gewächshäuser für das Ziehen und Züchten von Pflanzen.

Eine weitere Möglichkeit, diesen Bedarf an Umgang mit land- und gartenwirtschaftlichen Erzeugnissen zu fördern, sind außerdem Zimmergewächshäuser. In dieser Hinsicht sind bereits Zimmergewächshäuser bekannt geworden, die einen aus Metallstangen über entsprechende Verbindungsstücke gebildeten Rahmen bilden, über den dann ein möglichst einteiliger, licht- und luftundurchlässiger Überzug aus einer laminierten, mehrschichtigen Folie in Form eines Zeltes aufgezogen und über einen Reißverschluß geschlossen wird. In das Zimmergewächshaus einbringbare Böden ermöglichen ein Ziehen von Saat- und Pflanzgut in mehreren Etagen.
Dieses bekannte Zimmergewächshaus hat mehrere Nachteile. Zum einen ist sein Aufbau über das Metallstangengerüst und der darüber hinwegzuziehenden einstückigen Plane umständlich und zum anderen bietet das Gewächshaus keine variablen Erweiterungsmöglichkeiten. Die Konstruktion erlaubt nur den Vertrieb in zwei festen Größen.

Mit dem taiwanesischen Gebrauchsmuster TW M 313 418 U ist des weiteren eine Pflanzbox bekanntgeworden, bei welcher ein Pflanzbehälter für die Aufzucht von Pflanzen an seinen Ecken mit aus dem Behälter hochragenden Streben ausgestattet ist, welche Führungen aufweisen, in die an allen vier Seiten der Box Seitenelemente eingeschoben werden können. Zusätzlich weist die Box eine obere Abdeckung auf, die für die Durchlüftung der Box mit einer Vielzahl von Luftlöchern ausgestattet ist. Umlaufende Kanäle dieser Abdeckung ermöglichen es den Seitenelementen, dort einzugreifen und so gehalten zu werden.

Demgegenüber offenbart die FR-A-1 525 915 eine kleine Gehäusekonstruktion, die leicht zu montieren und wieder zu demontieren sein soll und für den Außenbereich Verwendung finden kann. Zweck dieser Gehäusekonstruktion ist es, kleine Unterstände bereitzustellen, die Schutz gegen Regen und Sonne bieten, um z.B. Wäsche zu trocknen, zur Verwendung als Autogarage, als kleines Lagerhaus für diverse Gegenstände und als überdachte Terrasse. Auch eine mögliche Verwendung als Gewächshaus ist offenbart.
Diese Gehäusekonstruktion besteht grundsätzlich aus Seitenelementen aus Kunststoff, die über Rahmen in beliebiger Weise kombiniert werden können, so daß einerseits Gehäusekonstruktionen variabler Größe und andererseits variabler Form entstehen. Ein Bodenelement weist diese Gehäusekonstruktion nicht auf.

Und schließlich ist noch die DE-A-34 33 215 zu nennen, welche einen Bauelementesatz mit aneinanderfügbaren Bauelementen offenbart, die z. B. zur Errichtung eines Treibhauses dienen können. Platten aus Glas, Kunststoff, Holz oder durch Gewebe bzw. Gitter versteiften Folien werden in einem Rahmen gehalten und weisen jeweils außen eine umlaufende Dachkante auf. Je ein solches Bauelement wird mit einem weiteren Bauelement über die Schrägflächen der Dachkanten aneinandergefügt und über steckbare Verbinder lösbar verbunden. Auch bei diesem Bauelementesatz ist kein Bodenelement vorgesehen, da dies für die Errichtung eines entsprechenden kleinen Bauwerks über Pflanzbeeten hinderlich wäre.

Ausgehend von diesem Stand der Technik lag der vorliegenden Erfindung die Aufgabe zugrunde, ein Zimmergewächshaus zu schaffen, das in möglichst variablen Größen bereitgestellt und dabei leichter aufbaugebaut werden kann als das bekannte Zimmergewächshaus. Wahlweise soll gleichzeitig eine verbesserte Luftversorgung und Geruchsverhinderung und Strom- und Wasserzufuhr ermöglicht werden.

Gelöst wird diese Aufgabe durch ein Zimmergewächshaus, das ein Grundgerüst aus Boden- und Decken- sowie Seiten- und Türelementen aufweist. Diese sind jeweils separat und variabel miteinander verbindbar und weisen jeweils eine licht- und luftundurchlässige Bespannung und Führungen für Stabilisierungselemente sowie Verbindungselemente in Form von Laschen und dreiarmigen Verbindungsstücken auf. Die Führungen sind so angebracht, daß sie jeweils an den Seiten- und Türelementen und parallel zu dem jeweils benachbarten Türelement bzw. parallel zu dem benachbarten Seitenelement sowie benachbart und parallel zu dem jeweiligen Boden- und Deckenelement verlaufen. Die Stabilisierungselemente sind aus rostfreiem Material, vorzugsweise aus Metall gebildet. Das dreiarmige Verbindungsstück ist als ein weiteres Verbindungselement jeweils zur Verbindung von Seitenelementen untereinander vorgesehen.

Gemäß einer bevorzugten Ausführungsform ist das erfindungsgemäße Zimmergewächshaus durch weitere Boden-, Decken-, Seiten- und Türelemente beliebig erweiterbar.

Die Bespannung des Zimmergewächshauses ist vorzugsweise mehrschichtig ausgebildet und weist zumindest eine textile Schicht sowie eine Kunststoffbeschichtung und eine Beschichtung mit hohem Reflektionsvermögen auf.

Die Beschichtung mit hohem Reflektionsvermögen kann eine weiße Folie oder eine Folie mit Silberbeschichtung sein.
Die Textilschicht der Bespannung kann aus einem Webstoff, die Kunststoffschicht aus Polyethylen und diese zusammen mit der Beschichtung mit hohem Reflektionsvermögen als Laminat ausgebildet sein.

Die Stabilisierungselemente des erfindungsgemäßen Gewächshauses sind aus rostfreiem Material, vorzugsweise aus Metall gebildet. Gemäß einer Ausführungsform sind die Stabilisierungselemente als Metallstangen aus Rund-Stahlrohr gebildet.

Die Verbindungselemente sind als Laschen an den Boden-, Decken-, Seiten- und Türelementen ausgebildet.

Vorzugsweise ist dann vorgesehen, daß die Laschen Haken und Schlaufen in der Weise aufweisen, daß benachbarte Elemente über einen Klettverschluß miteinander verbindbar sind.

Als ein weiteres Verbindungselement ist ein dreiarmiges Verbindungsstück zur Verbindung der Seiten- bzw. Türelemente untereinander vorgesehen. Dieses ist dazu vorgesehen, die vorzugsweise als Metallstangen ausgebildeten Stabilisierungselemente von jeweils zwei horizontalen und einer vertikalen Führung aufzunehmen.

Nicht gemäß der Erfindung ist auch einen Flansch zur Verbindung eines Innenraums mit einer äußeren Umgebung offenbart, mit einem ein Gewinde aufweisenden Anschlußstück, dessen Durchmesser zumindest teilweise an eine Aussparung in der Begrenzung von Innenraum zu Umgebung angepaßt ist, so daß er paßgenau hindurchgeführt werden kann, und einem mit dem Gewinde des Anschlußstücks zusammenwirkenden Schraubring zur Bildung der Flanschverbindung.
Vorzugsweise weist das Anschlußstück einen Dichtring auf.

Das Anschlußstück und/oder der Schraubring können an dem jeweils von der Flanschverbindung wegweisenden Ende ein zusätzliches Gewinde zur Aufnahme weiterer Verbindungsstücke aufweisen.

Das zusätzliche Verbindungsstück kann ein Reduzierstück sein.
Der Flansch ist für eine Vielzahl verschiedener Anwendungen einsetzbar. Besonders bevorzugt wird er in dem weiter oben näher dargestellten erfindungsgemäßen Gewächshaus gemäß einer seiner Ausführungsformen als Anschluß für Leitungen, vorzugsweise für Lüftung, Wasser- und Stromleitungen, verwendet.

Im folgenden soll die Erfindung anhand eines Ausführungsbeispiels näher erläutert werden.

Es zeigen:
- Fig. 1:: eine schematische Ansicht eines erfindungsgemäßen Zimmergewächshauses in Explosionsdarstellung,
- Fig. 2:: eine schematische Ansicht des erfindungsgemäßen Zimmergewächshauses vor dem Montieren von Boden- und Deckenelement, und
- Fig. 3:: eine schematische Darstellung eines nicht erfindungsgemäßen Flansches.

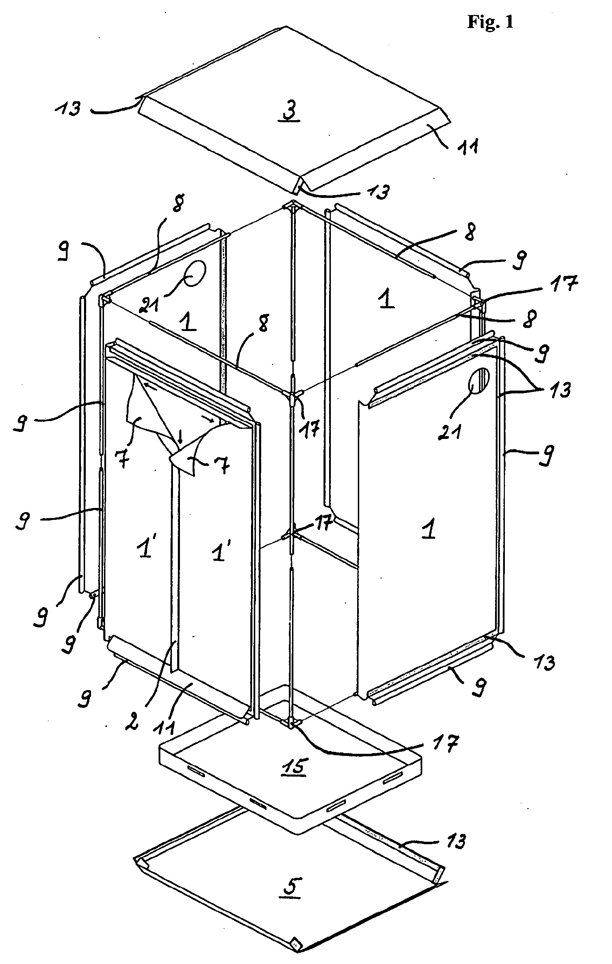

In Fig. 1 sind vier Seitenelemente 1, 1' eines im Ausführungsbeispiel quadratisch ausgebildeten Zimmergewächshauses dargestellt, von denen drei Seitenelemente 1 gleich ausgebildet sind und das vierte Seitenelement 1' etwa mittig einen vertikal ausgerichteten Reißverschluß 2 aufweist, der als Tür bzw. Zugang zu dem Zimmergewächshaus dient. Bei dem Reißverschluß 2 handelt es sich um eine für diesen Verwendungszweck handelsüblich erhältliche Ware.
Ergänzt werden die Seitenelemente 1 durch zwei wieder baugleiche Elemente, die als Decken- 3 und als Bodenelement 5 dienen. Alle Elemente 1, 1', 3, 5 weisen eine reißfeste, licht- und luftdichte Bespannung 7 auf, die mehrschichtig ist und im Ausführungsbeispiel nach außen hin aus einem 600d Webstoff besteht, auf den zunächst, nach innen weisend, eine schwarze Polyethylenfolie laminiert worden ist und im Anschluß daran noch eine die innerste Schicht der Bespannung 7 bildende weiße Folie mit einem entsprechend hohen Reflexionsvermögen im Innenraum des Zimmergewächshauses.
Alternativ kann die innerste Schicht der Bespannung 7 aus einer Silberfolie gebildet sein. Letztere ermöglicht ein besonders hohes Reflexionsvermögen.

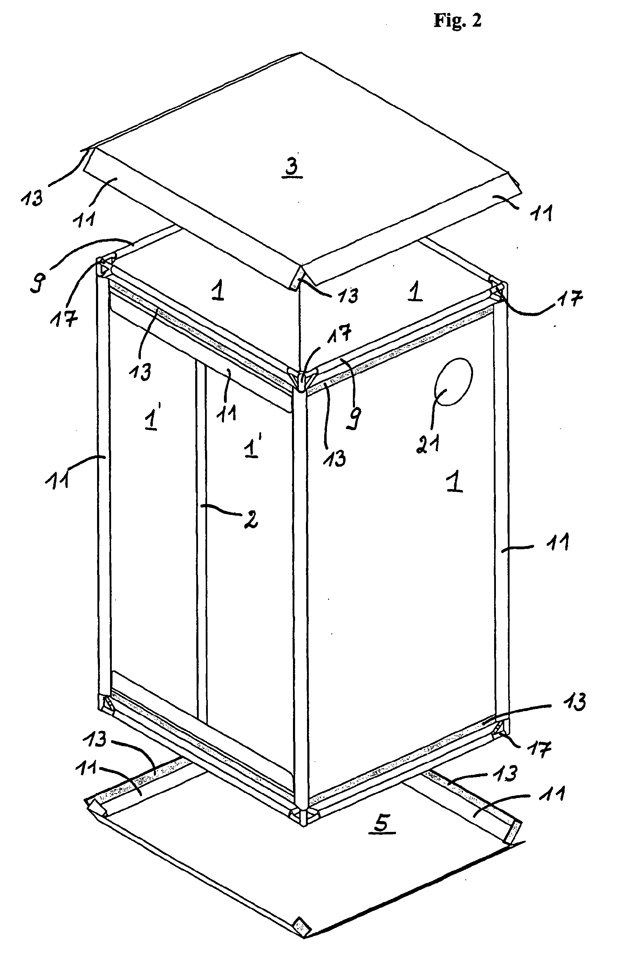

Stabilisiert werden diese Elemente des Zimmergewächshauses über Metallstangen 8 in Form von Rund-Stahlrohren, die in dafür vorgesehene Führungen 9 eingeschoben werden. Untereinander erfolgt die Verbindung der Seiten- 1, Decken- 3 und Bodenelemente 5 über Laschen 11, die jeweils an den Seiten- 1, Decken- 3 und Bodenelementen 5 ausgebildet sind und Überlappungen bilden, wie insbesondere Fig. 2 dies veranschaulicht. Zum Zweck eines schnellen Aufbaus des Zimmergewächshauses sind die Laschen abwechselnd als Haken- und Flauschband eines Klettverschlusses 13 ausgebildet.

Auf diese Weise entsteht ein Zimmergewächshaus in Form einer im vorliegenden Ausführungsbeispiel so gewählten, aber nicht zwangsläufig quadratischen Box. Daher zeigen die Fig. 1 und 2 eine rechteckige Ausführung, wobei aber aus Fig. 1 ersichtlich ist, daß durch Verwendung der entsprechenden Anzahl von Metallstangen 8, bzw. Rund-Stahlrohren in vertikaler Ausrichtung eine Box in quadratischer Ausführung erhalten wird.
Insbesondere bei der quadratischen Box besteht der Vorteil, das einzelne, untereinander gleich große Boxen miteinander verbunden werden können, so daß mit einem Grundelement in einfacher Weise eine doppelt oder mehrfach große Box erstellt werden kann, die dann als Ganzes das Zimmergewächshaus bildet. Auch das Verbinden mehrerer Boxen untereinander erfolgt mittels der Überlappungen durch die Laschen 11 an den Seiten- 1, Decken- 3 und Bodenelementen 5.
Im oberen Bereich des Zimmergewächshauses sind Befestigungsmöglichkeiten für sämtliches Zubehör, das im Rahmen eines Gewächshauses erforderlich ist oder Verwendung finden kann, vorgesehen, die hier nicht näher dargestellt sind.

Optional kann zusätzlich vorgesehen sein, daß im oberen Bereich des Zimmergewächshauses ein Absaugventilator und ein Aktivkohlefilter angebracht sind, wodurch ein Kamineffekt erzielt wird, der unangenehmen Geruch verhindert und für eine ausreichende Luftzirkulation sorgt.

Im unteren Bereich befindet sich noch ein herausnehmbarer, wasserfester und abwaschbarer Einlegeboden 15.

Im folgenden soll der Aufbau des erfindungsgemäßen Zimmergewächshauses, näher beschrieben werden. Bei dem Aufbau wird zunächst von einem Seitenelement 1 ausgegangen, und zunächst werden die Metallstangen 8 in Form der rostfreien Rund-Stahlrohre in die dafür vorgesehenen Führungen 9 an dem Seitenelement 1 eingeschoben. Dabei können im Fall von rechteckigen Zimmergewächshäusem für die vertikal ausgerichteten Seitenteile zwei Metallstangen 8 vorgesehen sein. Bei quadratisch ausgebildeten Zimmergewächshäusern ist in der Regel nur eine Metallstange 8 vorgesehen.
Nach dem Einführen der Metallstangen 8 wird an den Eckbereichen ein Verbindungsstück 17 angebracht, das dreiarmig ist und das Verbinden des vorbereiteten Seitenelements 1 mit einem weiteren Seitenelement 1 der Box ermöglicht. Das Decken- 3 und das Bodenelement 5 weisen im Ausführungsbeispiel keine Metallstangen 8 und deren Führungen auf.

Ein weiteres, wie eben geschildert vorbereitetes Seitenelement 1 wird nun entsprechend etwa im rechten Winkel an das erste Seitenelement 1 angefügt und auf der gegenüberliegenden Seite das nächste Seitenelement 1, ebenfalls etwa im rechten Winkel. Dazu werden die Metallstangen 8 in die entsprechenden Verbindungsstück 17 eingefügt. Als letztes wird das vierte Seitenelement 1 mit den ihm benachbarten Seitenelementen 1 verbunden. Anschließend wird das Bodenelement 5 über den zuvor schon beschriebenen Klettverschluß an den vier Seitenelementen befestigt und die Box dann aufgestellt, so daß das Bodenelement 5 nach unten weist. Nun wird noch das Deckenelement 3 ebenfalls über eine Klettverschluß-Verbindung über entsprechende Haken- und Flauschbänder verschlossen. Als letztes werden noch alle seitlich nicht befestigten Klettverschlußbänder, die nicht für den Anbau an eine weitere Box benötigt werden, hochgeklappt, um so die fertige Box bzw. das fertige Zimmergewächshaus zu bilden.

In der einfachsten Ausführungsform befinden sich Zu- und Ableitungen für z.B. Strom, Wasser und Belüftung im Bodenbereich jeder Box des Zimmergewächshauses. Dazu sind an vorbestimmten Stellen geeignete, an sich dem Fachmann in bezug auf die Konstruktion geläufige Durchlässe in der Bespannung 7 vorgesehen.

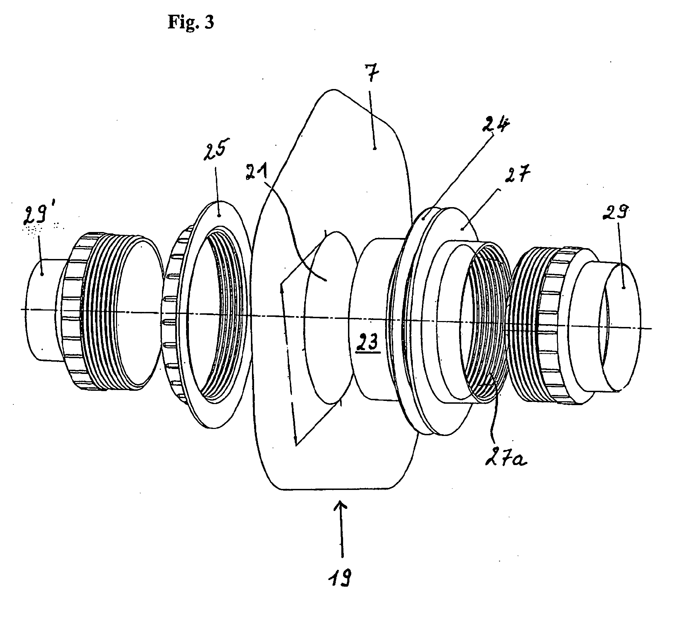

In einer besonderen Ausführung des erfindungsgemäßen Zimmergewächshauses werden diese Durchlässe durch einen besonders ausgestalteten Flansch 19 ersetzt, der dann einen weiteren erfindungsgemäßen Bestandteil der Box bildet. Dieser Flansch 19 ist in Fig. 3 näher dargestellt. Er dient dazu, Anschlüsse für Lüftung, Wasser- und Stromleitungen in den jeweiligen Boxen bzw. auch nur der einen Box des Zimmergewächshauses zu integrieren.
Dazu ist jeweils an einer geeigneten Stelle in der Bespannung 7 eine üblicherweise kreisrunde Aussparung 21 vorgesehen, durch die ein Anschlußstück 23, das mit einem Dichtring 24 aus Silikon versehen ist, in etwa paßgenau hindurchgeführt und auf der anderen Seite der Bespannung 7 mit einem mit dem Gewinde des Anschlußstücks 23 zusammenwirkenden Schraubring 25 zur Bildung des Flansches 19 zusammengeschraubt wird. Wie Fig. 1 zeigt, sind im Ausführungsbeispiel jeweils zwei der kreisrunden Aussparungen 21 an einander gegenüberliegenden Seitenelementen 1 der dargestellten Box vorgesehen. An diese beiden Seitenelemente 1 würde sich auch ein Anbau einer oder mehrerer weiterer Boxen anschließen, so daß über den Flansch 19 eine Weiterführung der Anschlüsse für Lüftung, Wasser und Strom in den jeweils benachbarten Boxen erfolgen kann. An den Dichtring 24 des Anschlußstücks 23 und damit in der von der Bespannung 7 wegweisenden Richtung schließt sich eine Manschette 27 mit einem Innengewinde 27a an, die zur wahlweisen Verbindung mit weiteren Rohrelementen für Lüftungs-, Wasser- und Stromanschlüssen dient oder wahlweise, wie in Fig. 3 dargestellt, noch ein Reduzierstück 29 aufweist. Ein vergleichbares Reduzierstück 29' kann auch im Anschluß an den Schraubring 25 wahlweise vorgesehen sein.

Als Material für den Flansch 19 wurde im Ausführungsbeispiel ein ABS-Kunststoff verwendet. Es können aber genauso dem Fachmann an sich geläufige andere Kunststoffmaterialien verwendet werden.

## Patentansprüche

1. Zimmergewächshaus, mit einem Grundgerüst aus Boden- (5) und Decken-(3) sowie Seiten- (1) und Türelementen (1'), die jeweils separat und variabel miteinander verbindbar sind und jeweils eine licht- und luftundurchlässige Bespannung (7) und Führungen (9) für Stabilisierungselemente sowie Verbindungselemente in Form von Laschen (11) und dreiarmigen Verbindungsstücken (17) aufweisen, wobei die Führungen (9) jeweils an den Seiten- und Türelementen und parallel zu dem jeweils benachbarten Tür- oder Seitenelement sowie benachbart und parallel zu dem jeweiligen Boden-(5) und Deckenelement (3) verlaufend angebracht und die Stabilisierungselemente aus rostfreiem Material, vorzugsweise aus Metall gebildet sind, und wobei das dreiarmige Verbindungsstück (17) als ein weiteres Verbindungselement jeweils zur Verbindung von Seitenelementen (1, 1') untereinander vorgesehen ist.

2. Zimmergewächshaus nach Anspruch 1, **dadurch gekennzeichnet, daß** es durch weitere Boden- (5), Decken- (3), Seiten- (1) und Türelemente (1') beliebig erweiterbar ist.

3. Zimmergewächshaus nach Anspruch 1 oder 2, **dadurch gekennzeichnet, daß** die Bespannung (7) mehrschichtig ausgebildet ist und zumindest eine textile Schicht sowie eine Kunststoffbeschichtung und eine Beschichtung mit hohem Reflektionsvermögen aufweist.

4. Zimmergewächshaus nach Anspruch 3, **dadurch gekennzeichnet, daß** die Beschichtung mit hohem Reflektionsvermögen eine weiße Folie oder eine Folie mit Silberbeschichtung ist.

5. Zimmergewächshaus nach Anspruch 3 oder 4, **dadurch gekennzeichnet, daß** die Textilschicht aus einem Webstoff, die Kunststoffschicht aus Polyethylen und diese zusammen mit der Beschichtung mit hohem Reflektionsvermögen als Laminat ausgebildet sind.

6. Zimmergewächshaus nach einem der Ansprüche 1 bis 5, **dadurch gekennzeichnet, daß** die Stabilisierungselemente als Metallstangen (8) aus Rund-Stahlrohr gebildet sind.

7. Zimmergewächshaus nach einem der Ansprüche 1 bis 6, **dadurch gekennzeichnet, daß** die Verbindungselemente als Laschen (11) an den Boden-(5), Decken- (3), Seiten- (1) und Türelementen (1') ausgebildet sind.

8. Zimmergewächshaus nach Anspruch 7, **dadurch gekennzeichnet, daß** die Laschen (11) Haken und Schlaufen in der Weise aufweisen, daß benachbarte Elemente über einen Klettverschluß (13) miteinander verbindbar sind.

## Claims

1. Propagator, with a basic framework of floor (5) and roof (3) elements and side (1) and door (1') elements, which can each be joined to each other separately and adjustably, and which each have a covering (7) impermeable to light and air and guides (9) as stabilising elements, and connecting elements in the form of tabs (11) and three-arm connecting pieces (17), where the guides (9) are positioned along each of the side and door elements, and parallel to the adjacent floor (5) and roof elements (3); and where the stabilising elements are made of corrosion-resistant material, preferably metal; and where the three-arm connecting piece (17) is designed as an additional connecting element for joining the side elements (1, 1') to each other.

2. Propagator according to Claim 1, **characterised in that** it can be extended as desired by adding more floor (5), roof (3), side (1) and door elements (1').

3. Propagator according to Claim 1 or 2, **characterised in that** the covering (7) is constructed of multiple layers, and has at least one textile layer and a plastic coating, and a coating with high reflectivity.

4. Propagator according to Claim 3, **characterised in that** the coating that has a high reflectivity is a white film or a silver-coated film.

5. Propagator according to Claim 3 or 4, **characterised in that** the textile layer is made of a woven fabric, the plastic layer is made of polyethylene, and these together with the high-reflectivity coating are constructed as a laminate.

6. Propagator according to one of the Claims 1 to 5, **characterised in that** the stabilising elements are designed as metal rods (8) made of round steel tubing.

7. Propagator according to one of the Claims 1 to 6, **characterised in that** the connecting elements are formed as tabs (11) on the floor (5), roof (3), side (1) and door elements (1').

8. Propagator according to Claim 7, **characterised in that** the tabs (11) are fitted with hooks and loops in such a way that adjacent elements can be connected together by means of a touch fastener (13).

## Revendications

1. Serre d'intérieur, avec une structure de base formée d'éléments de fond (5), de plafond (3), latéraux (1) et de porte (1'), qui peuvent être respectivement assemblés entre eux séparément et de façon variable et qui présentent respectivement un habillage (7) opaque et imperméable à l'air et des guides (9) pour des éléments de stabilisation, ainsi que des éléments d'assemblage sous la forme de pattes (11) et de connecteurs à trois bras (17), sachant que les guides (9) sont respectivement installés sur les éléments latéraux et de porte et en s'étendant parallèlement à l'élément de porte ou latéral respectivement voisin ainsi qu'au voisinage de l'élément respectif de fond (5) et de plafond (3) et parallèlement à ce dernier, et que les éléments de stabilisation sont réalisés en matériau inoxydable, de préférence en métal, et sachant que le connecteur à trois bras (17) est prévu comme élément d'assemblage supplémentaire respectivement destiné à l'assemblage des éléments latéraux (1, 1') entre eux.

2. Serre d'intérieur selon la revendication 1, **caractérisée en ce qu'**elle est extensible à volonté par d'autres éléments de fond (5), de plafond (3), latéraux (1) et de porte (1').

3. Serre d'intérieur selon la revendication 1 ou 2, **caractérisée en ce que** l'habillage (7) est réalisé à plusieurs couches et présente au moins une couche textile ainsi qu'un revêtement en matière plastique et un revêtement à haut pouvoir réfléchissant.

4. Serre d'intérieur selon la revendication 3, **caractérisée en ce que** le revêtement à haut pouvoir réfléchissant est une feuille blanche ou une feuille revêtue d'argent.

5. Serre d'intérieur selon la revendication 3 ou 4, **caractérisée en ce que** la couche textile est constituée d'un tissu et la couche de matière plastique de polyéthylène, et ces couches sont réalisées sous forme de stratifié conjointement avec le revêtement à haut pouvoir réfléchissant.

6. Serre d'intérieur selon l'une des revendications 1 à 5, **caractérisée en ce que** les éléments de stabilisation sont réalisés sous la forme de tiges métalliques (8) en tube d'acier rond.

7. Serre d'intérieur selon l'une des revendications 1 à 6, **caractérisée en ce que** les éléments d'assemblage sont réalisés sous la forme de pattes (11) sur les éléments de fond (5), de plafond (3), latéraux (1) et de porte (1').

8. Serre d'intérieur selon la revendication 7, **caractérisée en ce que** les pattes (11) présentent des crochets et des boucles de telle sorte que des éléments voisins peuvent être assemblés entre eux au moyen d'une fermeture auto-agrippante (13).
